# EUROPEAN PATENT APPLICATION

(11) **EP 2 975 849 A1**
(43) Date of publication of application: **20.01.2016**
(21) Application number: 14306167.9
(22) Date of filing: 18.07.2014
(51) Int. Cl.: H04N 19/50, H04N 19/30, H04N 19/463, H04N 19/186

(54) **Method for decoding a color mapping table and corresponding device**

(71) Applicant: Thomson Licensing, 92130 Issy-les-Moulineaux (FR)
(72) Inventor: Bordes, Philippe, 35576 Cesson-Sévigné (FR); Racape, Fabien, 35576 Cesson-Sévigné (FR); Andrivon, Pierre, 35576 Cesson-Sévigné (FR)
(74) Representative: Huchet, Anne

(57) **Abstract**

A method for decoding a color mapping table coded as a hierarchical tree of octants arranged in levels is disclosed. The method comprises for at least one current octant of said hierarchical tree:
a) decoding (S10) at least one data item representative of a color parameter associated with said at least one current octant;
b) associating (S12) said decoded at least one data item with an index in the color mapping table, wherein the index is determined at least based on a maximal split depth of the color mapping table and based on a level position of said at least one current octant in the hierarchical tree.

## Description

### 1. FIELD OF THE INVENTION

This invention is in the field of Color Gamut Scalability (CGS) coding/decoding. Specifically, a method of decoding a color mapping table coded as a hierarchical tree of octants/nodes arranged in levels is disclosed. A corresponding decoding device is disclosed.

### 2. BACKGROUND OF THE INVENTION

EP application PCT/EP14/055333 *"Method for encoding and method for decoding a LUT and corresponding devices"* describes a method of encoding a color 3D LUT (LUT is an English acronym of Look-Up Table) using a hierarchical tree of octants and the prediction of some color parameters from previously reconstructed neighboring color parameters. The color 3D LUT is also called color mapping table and an octant may be represented by a node.

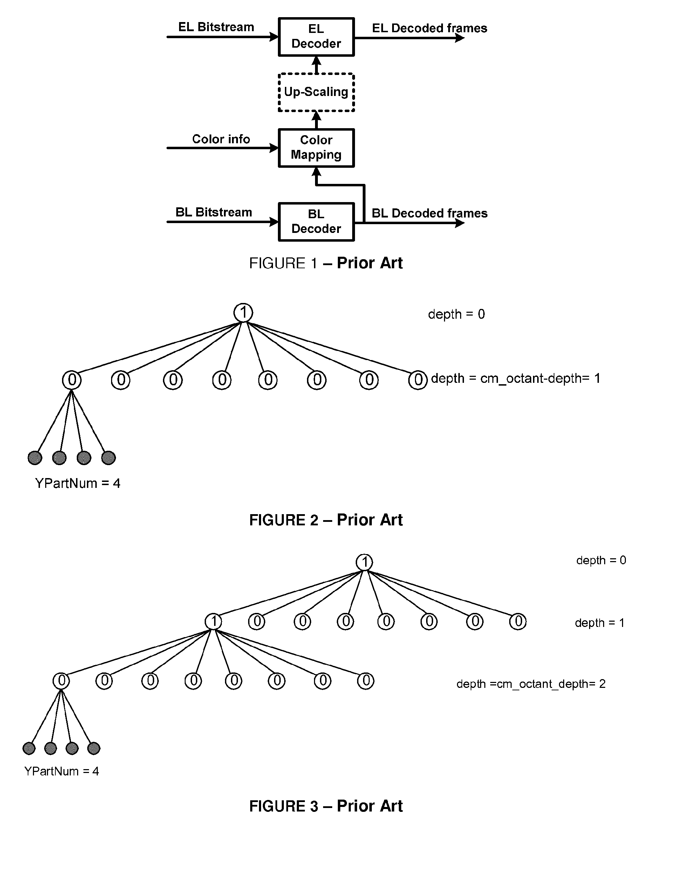

In Scalable Video Coding (e.g. SHVC as defined in the document entitled Preliminary version of High efficiency video coding (HEVC) scalable extension Draft 6, JCTVC_01008_v3 published on June 7, 2014), in the case where the color spaces and/or the color gamuts of the Base Layer (BL) and of the Enhancement Layer (EL) are different, one can use a Color Mapping process to transform the color samples of the BL when performing the prediction of the EL samples from BL samples as depicted in **Figure 1****.** This tool is called Color Gamut Scalability (CGS) in SHVC. In Figure 1, the up-scaling is optional and is only applied in the case where BL pictures and EL pictures have different spatial resolutions.
In the current SHVC specification (JCTVC_Q1008_v3), the Color Mapping is performed using a 3D LUT containing color parameters. The 3D LUT is composed of a lattice of nodes/octants, each node/octant being associated with color parameters (e.g. 4 or 8 color vertices or 9 matrix coefficients with 3 additional offsets). Each node represents an octant, i.e. a portion of a 3D color space, e.g. YUV or RGB color space.
Exemplarily, the 3D LUT is described using a hierarchical tree of octants of maximal depth cm_octant_depth, where the final nodes/octants are further split into YPartNum leaves as depicted in **Figures 2 and 3****.** In this case the splitting is done in one dimension only, namely the Y dimension (in the YUV color space). For each of these YPartNum leaves, the color parameters are encoded. The encoding of one color parameter comprises coding of residual values, e.g. res_y, res_u, res_v as defined in JCTVC_Q1008_v3. The residual values and the reconstructed color parameters may be stored in 3D arrays (e.g. res_y[yldx][uldx][vldx], res_u[yldx][uldx][vldx], res_v[yldx][uldx][vldx] and LutY[yldx][uldx][vldx], LutU [yldx][uldx][vldx], LutV [[yldx][uldx][vldx] respectively).
The current coding syntax (as defined in JCTVC_Q1008_v3) thus makes it possible to recursively split the tree nodes into 8 octants as depicted in Figures 2 and 3. The splitting is signaled by the syntax element "split_octant_flag". In figures 2 and 3, the value of split_octant_flag is indicated inside the tree leaves.
The corresponding coding syntax is depicted in the following table 1 extracted from sections F.7.3.5.1 and F.7.3.5.2 of the document entitled *Preliminary version of High efficiency video coding (HEVC) scalable extension Draft 6, JCTVC-Q1008-V3.*

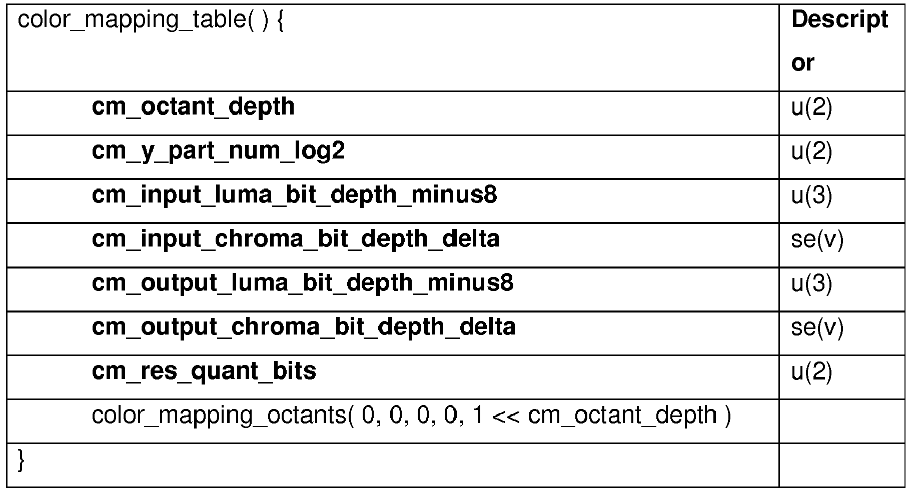

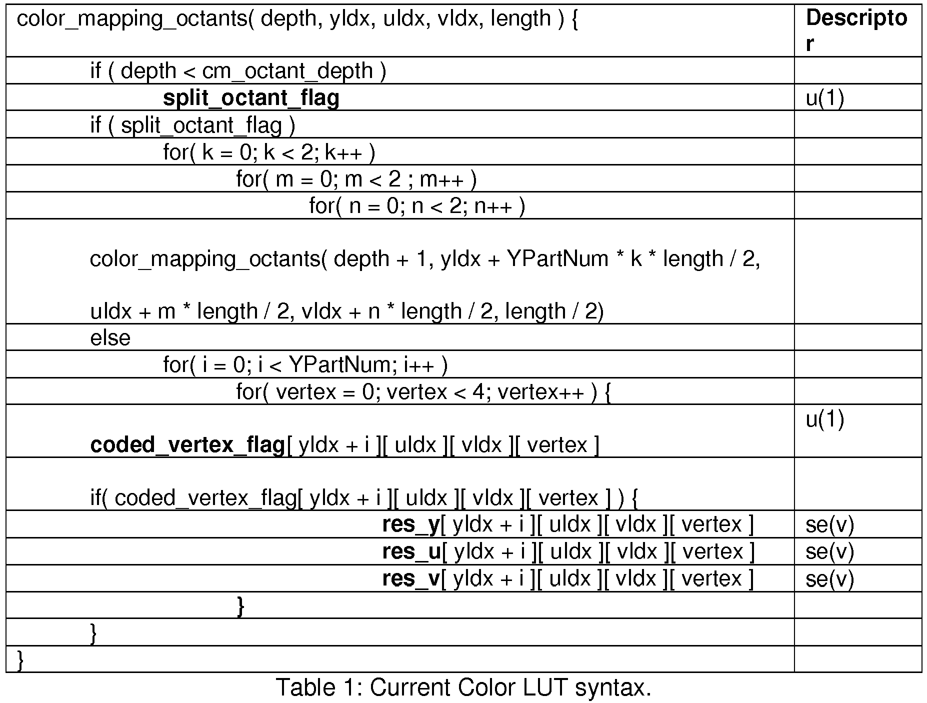

The color mapping table semantics are defined in section F.7.4.6.

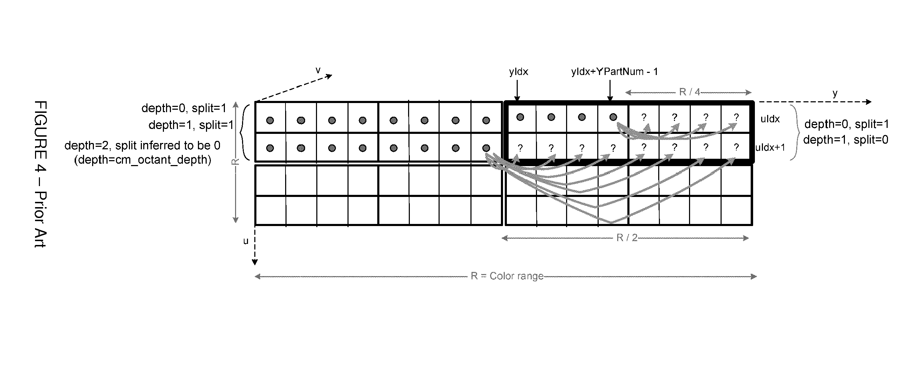

**Figure 4** represents an example of a 3D LUT (Y and U dimensions are represented while the V dimension is not) obtained with cm_octant_depth=2, YPartNum=4, where the octant(y=0,u=0,v=0, depth=0) is split into 8 octants, in which first octant octant(y=0,u=0,v=0, depth=1) is split again into 8 octants but the second octant octant(y=1,u=0,v=0, depth=1) (depicted with a bold line) is not split.
The solution as currently disclosed in JCTVC_Q1008_v3 has several drawbacks.
First, the reconstructed explicitly coded color parameters in JCTVC_Q1008_v3 are consecutively stored in the LUT (circle inside the octant delimited with the bold line). Therefore, the color space sampling of this octant is not optimal because not uniformly distributed inside the octant in the case where its depth is strictly inferior to cm_octant_depth and split_octant_flag=0. Second, in JCTVC_Q1008_v3, some of the residuals representative of color parameters may be "not explicitly encoded" (such values are identified by a question mark in Figure 4). In this case, JCTVC_Q1008_v3 teaches to derive these "non-explicitly-encoded" color parameters by inferring they have zero residuals. Then they are (recursively) derived from the last reconstructed neighboring (in the color table) color parameters in decoding order (i.e. previously decoded color parameters), as specified by the prediction process of the color parameters LUT values described in JCTVC_Q1008_v3 and as depicted by the arrows in the example of Figure 4. In this example, the relative distance of color parameters derivation is up to R/2 (with R = range of the component, typically 256 for a 8-bit full range signal) as depicted in Figure 4. Specifically, the distance between a non-explicitly-encoded color parameter and the corresponding explicitly-encoded color parameter is up to R/2 (as depicted in the second row of the Figure 4).

### 3. BRIEF SUMMARY OF THE INVENTION

A method for decoding a color mapping table coded as a hierarchical tree of octants arranged in levels is disclosed. The method comprises for at least one current octant of said hierarchical tree:
a) decoding at least one data item representative of a color parameter associated with said at least one current octant; and
b) associating said decoded at least one data item with an index in the color mapping table, wherein the index is determined at least based on a maximal split depth of the color mapping table and based on a level position of said at least one current octant in the hierarchical tree.
Specifically, the color parameters are almost uniformly arranged in the color mapping table. Consequently, a better color space sampling of the color mapping table is obtained in case of non-explicitly-encoded color parameters.
In addition, a lower distance derivation between explicitly-encoded color parameters and non-explicitly-encoded color parameters is used.

In a specific embodiment, associating said decoded at least one data item with an index of the color mapping table determined at least based on a maximal split depth of the color mapping table and based on a level position of said at least one current octant in the hierarchical tree comprises storing said at least one data item in an array at a location determined by said index.

According to a specific characteristic, the at least one data item is a residual of a color parameter.

Advantageously, the decoding method further comprises adding a prediction to said decoded at least one data item in order to obtain a decoded color parameter, wherein the prediction is obtained from at least one previously decoded color parameter.

Advantageously, the method for coding further comprises reconstructing a non-explicitly encoded color parameter at least from said decoded color parameter.

A decoding device for decoding a color mapping table coded as a hierarchical tree of octants arranged in levels is also disclosed that comprises a processor configured to:
a) decoding at least one data item representative of a color parameter associated with at least one current octant of said hierarchical tree;
b) associating said decoded at least one data item with an index in the color mapping table, wherein the index is determined at least based on a maximal split depth of the color mapping table and based on a level position of said at least one current octant in the hierarchical tree.

A decoding device for decoding a color mapping table coded as a hierarchical tree of octants arranged in levels is disclosed that said decoding device comprises:
- means for decoding at least one data item representative of a color parameter associated with at least one current octant of said hierarchical tree;
- means for associating said decoded at least one data item with an index in the color mapping table, wherein the index is determined at least based on a maximal split depth of the color mapping table and based on a level position of said at least one current octant in the hierarchical tree.

The device is configured to execute the steps of the method for decoding according to any of the embodiments and variants disclosed.

A computer program product comprising program code instructions to execute the steps of the decoding method according to any of the embodiments and variants disclosed when this program is executed on a computer.

A processor readable medium having stored therein instructions for causing a processor to perform at least the steps of the decoding method according to any of the embodiments and variants disclosed.

### 4. BRIEF DESCRIPTION OF THE DRAWINGS

In the drawings, an embodiment of the present invention is illustrated. The following description is made in connection with the drawings in which:
- Figure 1 shows a Scalable Video Decoder using Color Gamut Scalability according to the prior art;
- Figure 2 depicts a hierarchical tree describing a LUT with cm_octant_depth=1 and YPartNum=4 according to the prior art;
- Figure 3 depicts a hierarchical tree describing a LUT with cm_octant_depth=2 and YPartNum=4 according to the prior art;
- Figure 4 represents an example of a 3D LUT (Y and U dimensions are represented while the V dimension is not) obtained with cm_octant_depth=2, YPartNum=4 according to the prior art;
- Figure 5 depicts a device for decoding color mapping table coded as a hierarchical tree of nodes arranged in levels according to a specific and non-limitative embodiment of the invention;
- Figure 6 represents an exemplary architecture of the decoding device configured to decode a color mapping table from a bitstream according to an exemplary embodiment of the invention;
- Figure 7 represents a flowchart of a method for decoding a color mapping table coded as a hierarchical tree of nodes arranged in levels from a bitstream F according to a specific and non-limitative embodiment of the invention;
- Figure 8 represents an example of a 3D LUT (Y and U dimensions are represented while the V dimension is not) obtained with cm_octant_depth=2, YPartNum=4 according to a specific and non-limitative embodiment of the invention;
- Figure 9 depicts a flowchart of a method for decoding a color mapping table in two steps according to a specific and non-limitative embodiment of the invention; and
- Figure 10 represents an example of a 3D LUT (Y and U dimensions are represented while the V dimension is not) obtained with cm_octant_depth=2, YPartNum=4 according to a specific and non-limitative embodiment of the invention.

### 5. DETAILED DESCRIPTION OF THE INVENTION

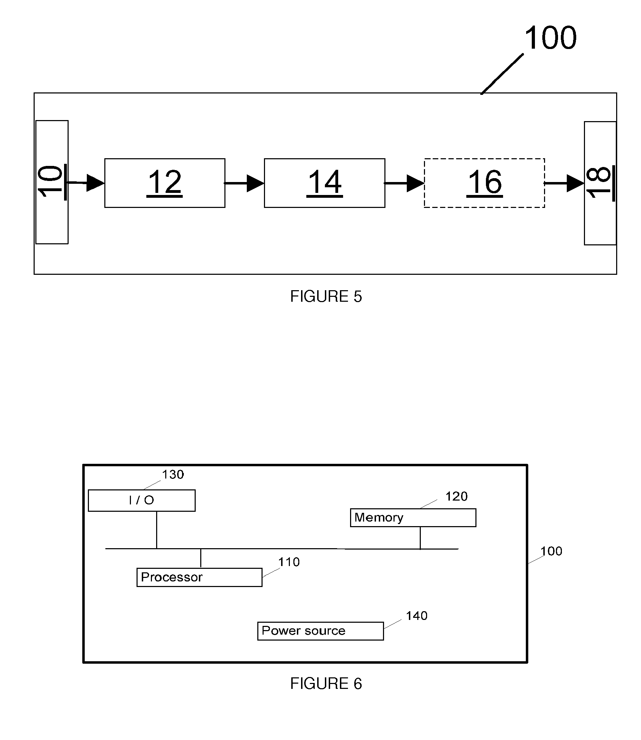

**Figure 5** depicts a device 100 for decoding a color mapping table coded as a hierarchical tree of nodes arranged in levels according to a specific and non-limitative embodiment of the invention. Each node represents an octant, i.e. a portion of a 3D color space, e.g. YUV or RGB color space. The decoding device 100 comprises an input 10 configured to receive a bitstream. The input 10 is linked to a decoding module 12 configured to decode at least one data item representative of at least one color parameter associated with at least one current node/octant of the hierarchical tree. The decoding module 12 is linked to a module 14 configured to associate the data item with an index of the color mapping table, wherein the index is determined at least based on a maximal split depth of the color mapping table and based on a level position of the current node/octant in the hierarchical tree. Exemplarily, the module 14 comprises a memory in which the data item is stored at a location determined by the index.
Optionally, the decoding device further comprises a module 16 configured to add a prediction data to the data item. The module 14 or the module 16 when present is linked to an output 18.
The color mapping table may be stored in a memory internal to the decoding device 100 or external to it. In a variant, the color mapping table is sent to a destination.

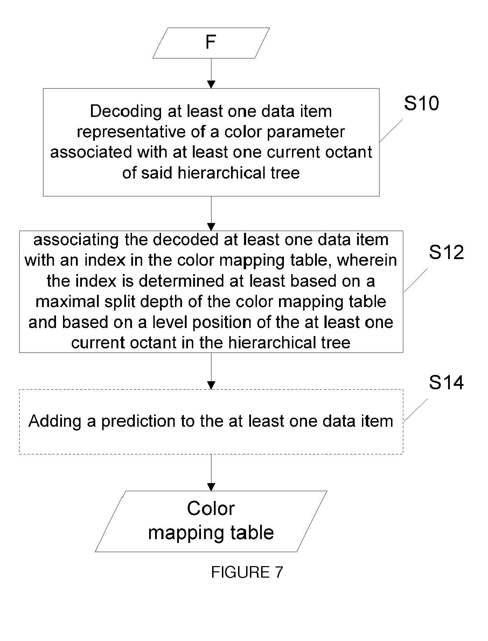

**Figure 6** represents an exemplary architecture of the decoding device 100 configured to decode a color mapping table from a bitstream according to an exemplary embodiment of the invention. The decoding device 100 comprises one or more processor(s) 110 , which is(are), for example, a CPU, a GPU and/or a DSP (English acronym of Digital Signal Processor), along with internal memory 120 (e.g. RAM, ROM, EPROM). The decoding device 100 comprises one or several Input/Output interface(s) 130 adapted to display output information and/or allow a user to enter commands and/or data (e.g. a keyboard, a mouse, a touchpad, a webcam); and a power source 140 which may be external to the decoding device 100. The device 100 may also comprise network interface(s) (not shown). The bitstream may be obtained from a source. According to different embodiments of the invention, the source belongs to a set comprising:
- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).
According to different embodiments of the invention, the decoded color mapping table may be sent to a destination. As an example, the decoded color mapping table is stored in a remote or in a local memory, e.g. a video memory or a RAM, a hard disk. In a variant, the decoded color mapping table is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.
According to an exemplary and non-limitative embodiment of the invention, the decoding device 100 further comprises a computer program stored in the memory 120. The computer program comprises instructions which, when executed by the decoding device 100, in particular by the processor 110, make the decoding device 100 carry out the method described with reference to figure 7. According to a variant, the computer program is stored externally to the decoding device 100 on a non-transitory digital data support, e.g. on an external storage medium such as a HDD, CD-ROM, DVD, a read-only and/or DVD drive and/or a DVD Read/Write drive, all known in the art. The decoding device 100 thus comprises an interface to read the computer program. Further, the decoding device 100 could access one or more Universal Serial Bus (USB)-type storage devices (e.g., "memory sticks.") through corresponding USB ports (not shown).
According to exemplary and non-limitative embodiments, the decoding device 100 is a device, which belongs to a set comprising:
- a mobile device ;
- a communication device ;
- a game device ;
- a set top box;
- a TV set;
- a tablet (or tablet computer) ;
- a laptop ;
- a display and
- a decoding chip.

**Figure 7** represents a flowchart of a method for decoding a color mapping table coded as a hierarchical tree of nodes/octants arranged in levels from a bitstream F according to a specific and non-limitative embodiment of the invention.
Exemplarily, the LUT is described using a hierarchical tree of maximal depth cm_octant_depth, where the final nodes/octants are further split into YPartNum leaves. In this latter case the splitting is done in one dimension only, namely the Y dimension. It will be appreciated, however, that the invention is not restricted to the splitting of the final nodes/octants in the Y dimension. For each of these YPartNum leaves, color parameters are encoded. The encoding of one color parameter may comprise coding of residual values, e.g. res_y, res_u, res_v as defined in JCTVC_Q1008_v3. The residual values and the decoded color parameters may be stored in 3D arrays (e.g. res_y[yldx][uldx][vldx], res_u[yldx][uldx][vldx], res_v[yldx][uldx][vldx] and LutY [[yldx][uldx][vldx], LutU [[yldx][uldx][vldx], LutV [[yldx][uldx][vldx] respectively).

In a step S10, at least one data item representative of at least one color parameter associated with at least one node/octant of the hierarchical tree is decoded. The data item can be the color parameter itself or can be a residual representative of the color parameter.

In a step S12, the decoded at least one data item is associated with an index of the color mapping table, wherein the index is determined at least based on a maximal split depth of the color mapping table and further based on the level position of the current node/octant in the hierarchical tree. To this aim, the syntax defined in the document *JCTVC-Q1008-V3* is amended as indicated in Table 2 (modified elements are shown in italics and bold). According to this table, the color mapping table is clearly encoded as a hierarchical tree of octants.

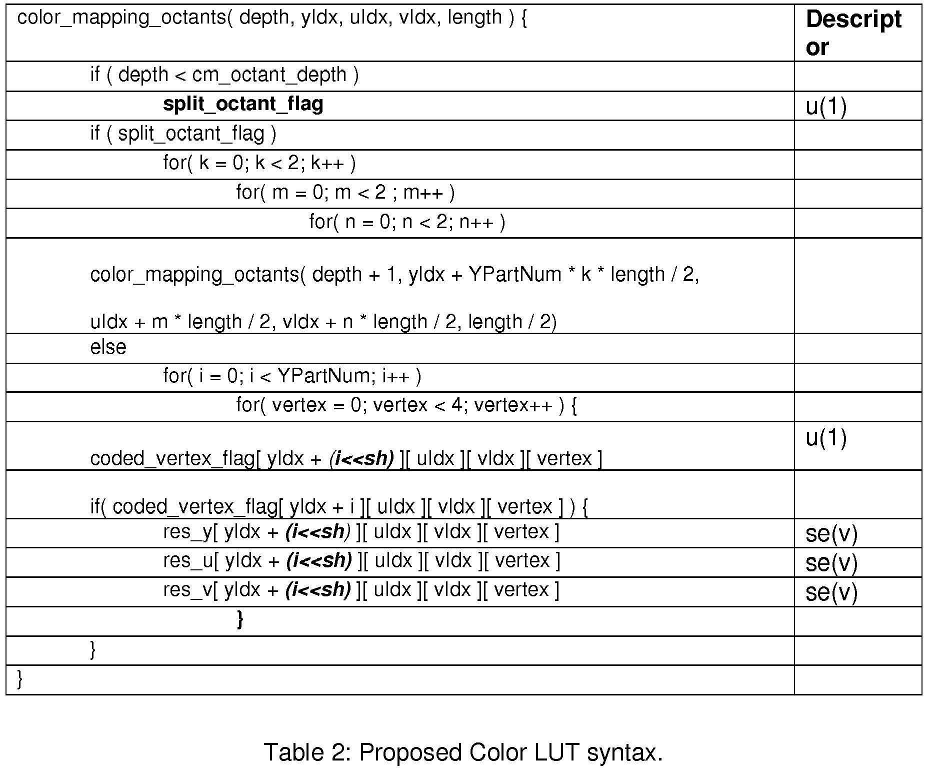

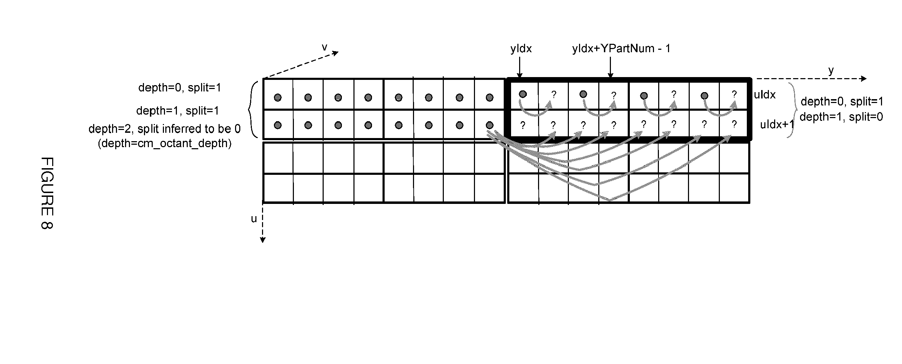

where sh = cm_octant_depth - depth, where cm_octant_depth specifies the maximal split depth of the color mapping table and is further disclosed in section F.7.4.6.1 of JCTVC_Q1008_v3 and depth defines the current level in the hierarchical tree, as indicated in figures 2 and 3. **Figure 8** represents the same configuration as depicted in Figure 4 but obtained with the method disclosed with respect to figure 7. Introducing the shift by i<<sh in table 2 makes it possible to obtain a nigh-uniform distribution of the color parameters in the LUT in case of non-explicitly-encoded color parameters (i.e. in the case where the current depth is strictly inferior to cm_octant_depth).

In an optional step S14, a prediction is added to the decoded at least one data item representative of the color parameter in order to decode a color parameter. Exemplarily, the prediction data is obtained from one or several previously decoded color parameter(s).
The method is advantageously iterated on all the nodes/octants to decode the whole color mapping table.

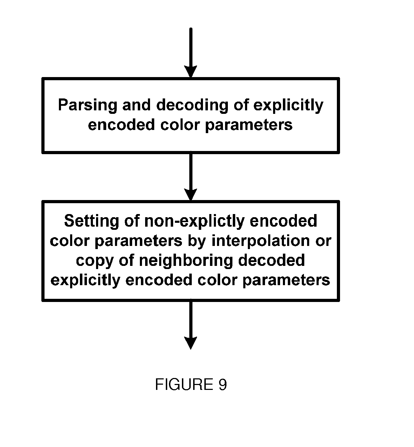

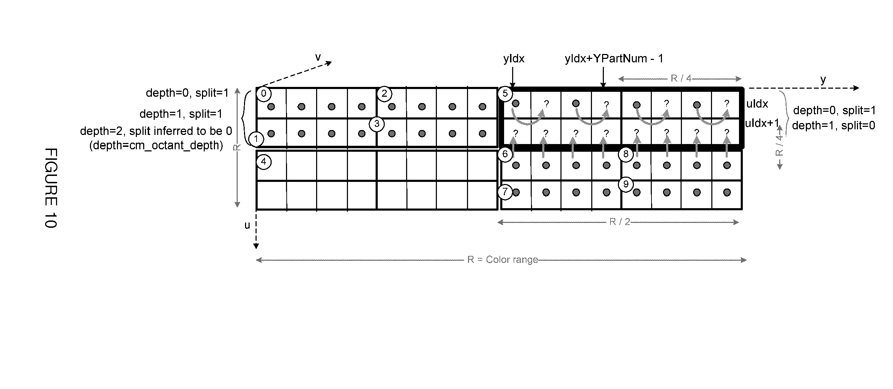

In a specific and non-limiting embodiment of the invention, the decoding/reconstruction of the color parameters is done in two steps as depicted in **Figure 9****.** In a first step, all explicitly encoded color parameters are decoded. In a second step, the non-explicitly encoded color parameters are reconstructed from neighboring decoded explicitly encoded color parameters.
In that way, the reconstruction process of these color parameters, i.e. non-explicitly encoded, can be done from any reconstructed explicitly-encoded color parameters, whatever its position in the LUT and independently to the parsing/decoding order of the explicitly-encoded color parameters.
In the first step, the explicitly encoded color parameters are decoded, stored and marked (as explicitly encoded). This information (marking) can be used at the non-explicitly-encoded color parameters reconstruction stage.
In the second step, non-explicitly-encoded color parameters (identified by "?" in the **figure 10****)** are reconstructed (by copy or by interpolation) from neighboring decoded explicitly-encoded color parameters (circles) but not in decoding order (multi-pass process). In this example, the distance derivation of non-explicitly-encoded color parameters to the corresponding explicitly-encoded color parameters is inferior or equal to R/4, that is less than with previous existing solution (Figure 4) thanks to a better sampling. In figure 10, the non-explicitly encoded color parameters (identified with a question mark in the figure 7) are derived from explicitly encoded color parameters (identified with circles). The derivation process is illustrated by the blue arrows. Advantageously, a lower distance derivation between explicitly-encoded color parameters and non-explicitly-encoded color parameters is used. Thus the non-explicitly-encoded color parameters are better predicted.
In the case where there exist non-explicitly-encoded color parameters (use of split_octant_flag), a better color space sampling of the 3D LUT is obtained. In addition, the non-explicitly encoded color parameters are better predicted.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for decoding a color mapping table coded as a hierarchical tree of octants arranged in levels, comprising for at least one current octant of said hierarchical tree:
a) decoding (S10) at least one data item representative of a color parameter associated with said at least one current octant;
b) associating (S12) said decoded at least one data item with an index in the color mapping table, wherein the index is determined at least based on a maximal split depth of the color mapping table and based on a level position of said at least one current octant in the hierarchical tree.

2. The method for decoding according to claim 1, wherein associating said decoded at least one data item with an index of the color mapping table determined at least based on a maximal split depth of the color mapping table and based on a level position of said at least one current octant in the hierarchical tree comprises storing said at least one data item in an array at a location determined by said index.

3. The method for decoding according to claim 1 or 2, wherein said at least one data item is a residual of a color parameter.

4. The method for decoding according to any of claims 1 to 3, further comprising adding a prediction to said decoded at least one data item in order to obtain a decoded color parameter, wherein said prediction is obtained from at least one previously decoded color parameter.

5. The method for decoding according to claim 4, further comprising reconstructing a non-explicitly encoded color parameter at least from said decoded color parameter.

6. A decoding device for decoding a color mapping table coded as a hierarchical tree of octants arranged in said decoding device comprising a processor configured to:
a) decoding at least one data item representative of a color parameter associated with at least one current octant of said hierarchical tree;
b) associating said decoded at least one data item with an index in the color mapping table, wherein the index is determined at least based on a maximal split depth of the color mapping table and based on a level position of said at least one current octant in the hierarchical tree.

7. A decoding device for decoding a color mapping table coded as a hierarchical tree of octants arranged in levels, said decoding device comprising:
- means for decoding at least one data item representative of a color parameter associated with at least one current octant of said hierarchical tree;
- means for associating said decoded at least one data item with an index in the color mapping table, wherein the index is determined at least based on a maximal split depth of the color mapping table and based on a level position of said at least one current octant in the hierarchical tree.

8. Decoding device according to claim 6, wherein said device is configured to execute the steps of the method for decoding according to any of claims 1 to 5.

9. A computer program product comprising program code instructions to execute the steps of the decoding method according to any of claims 1 to 5 when this program is executed on a computer.

10. A processor readable medium having stored therein instructions for causing a processor to perform at least the steps of the decoding method according to any of claims 1 to 5.
